# EUROPEAN PATENT SPECIFICATION

(11) **EP 4 600 439 B1**
(45) Date of publication and mention of the grant of the patent: **20.05.2026**
(21) Application number: 24220360.2
(22) Date of filing: 16.12.2024
(51) Int. Cl.: E04F 17/12, B65F 1/00

(54) **SEPARATOR ASSEMBLY FOR REFUSE CHUTES**
ABSCHEIDERANLAGE FÜR MÜLLSCHURREN
ENSEMBLE SÉPARATEUR POUR GOULOTTES À ORDURES

(30) Priority: 07.02.2024 GB 202401664
(43) Date of publication of application: 13.08.2025
(73) Proprietor: Hydro Wash Ltd, Yorkshire BD4 9AW (GB)
(72) Inventor: SMITH, Riley, Bradford, BD4 9AW (GB)
(74) Representative: Appleyard Lees IP LLP

(56) References cited:
- EP-B1- 1 953 095
- FR-A1- 2 537 638
- FR-A1- 2 705 715
- IT-A1- 202100 024 929

## Description

### Field of the Invention

The present disclosure relates to a separator assembly for refuse chutes. In particular, the disclosure is concerned with a separator assembly that separates refuse received from a refuse chute into categories of refuse, for example general waste and different types of recycling.

### Background

Refuse chutes are a type of waste management system that provides a route or routes for the movement of refuse (i.e., waste) from one point to another. Refuse chutes are often attached to buildings, either internally or externally, to provide a path for refuse to travel along. For example, a refuse chute may be located in a high-rise building.

Current refuse chutes typically comprise multiple inlets connected to a single outlet. For example, in a high-rise building there may be several refuse disposals points on different floors of the building into which refuse may be placed, with a single refuse collection point at the bottom of the building. The inlets, or disposal points may be in the form of a hopper or other similar means for receiving refuse. The hopper or similar mechanism controls the rate at which refuse is added to the refuse chute, preventing blockages or potentially dangerous objects from entering the refuse chute.

It will be appreciated that a typical refuse chute therefore handles only a single waste stream. As such, in many buildings waste deposited into the chute is classed as general waste and sent to a landfill, unless the waste is later manually sorted. Collecting waste in this manner negatively impacts the environment as it makes it far more difficult to separate different materials so that they may be reused or recycled. This results in more refuse being incinerated or sent to landfill.

As an alternative to a general waste stream, it is becoming common place to separate the refuse received by the refuse chute using a rotatable turret or a moveable deflector plate positioned at the outlet of the chute; controls at each of the inlets allow for the turret or deflector plate to be moved between different positions so that the waste fed through the refuse chute may be directed to different waste receptacles. Such an alternative comprising a rotatable turret is disclosed in document FR 2537638 A1.

However, because the refuse may be heavy, and have significant velocity when travelling through the chute, the refuse may impact the turret or the deflector plate with great force. As a result, the turret/deflector is regularly damaged and requires frequent maintenance.

Hence an improved method of separating refuse that may be retrofitted to existing refuse chutes or incorporated into new buildings is highly desirable.

### Summary

The present invention is defined according to the independent claims. Additional features will be appreciated from the dependent claims and the description herein. Any embodiments which are described but which do not fall within the scope of the claims are to be interpreted merely as examples useful for a better understanding of the invention.

The example embodiments have been provided with a view to addressing at least some of the difficulties that are encountered with current methods of separating refuse from a refuse chute, whether those difficulties have been specifically mentioned above or will otherwise be appreciated from the discussion herein.

In one aspect of the invention there is provided a separator assembly for a refuse chute. The separator assembly comprises a set of refuse separating chutes each comprising an inlet and an outlet separated vetically, and a positioning mechanism that is configured to locate the set of separating chutes relative to the refuse chute. The inlets of each of the separating chutes are configured to receive refuse from the refuse chute when the positiong mechanism aligns the respective chute with an outlet of the refuse chute. The outlets of each of the separating chutes are configured to deliver refuse to different locations (for example, corresponding to a set of refuse receptacles) when the corresponding inlet is aligned with the outlet of the refuse chute. Suitably, the privided assembly allows for straightforward separation of different types of waste at source (i.e., before waste collection) and, in contrast to existing devices, does so in a way that drastically reduces the maintainence required of the separator device.

In an example, the positioning mechanism may comprise a primary and a second engagement means, where the primary means are coupled to the set of separating chutes and the secondary means coupled to a neaby support structure (for example, the building wall). Suitably the primary engament means may be configured to engage with the secondary engagement means such that the set of refuse separating chutes are moveable. For example, the primary engagement means may comprise at least one of a roller bearing, a wheel, or a cog, while the secondary engagement means may comprise a rail configured to receive the bearing/wheel/cog and allow movement of the same up and down its length. Other rollable means may also be employed.

Preferably the positioning mechanism is arranged to provide linear movement of the separating chutes. That is, the positioning mechanism may be configured to move the set of refuse separating chutes along a horizontal (x) axis, for example parallel to a wall which is adjacent to the refuse chute (and to which the assembly may be attached) and orthogonal to the refuse chute which is generally vertical.

In an example, the set of refuse separating chutes may comprise a primary separating chute that extends longitudinally in the same (y) direction as the refuse chute. That is, the primary separating chute has its inlet and outlet arranged colinearly (and coaxially) along a longitudinal axis defined by the refuse chute, when the inlet of the primary chute is positioned to align with the outlet of the refuse chute. In an alternative example, the primary chute may instead be angled with respect to the longitudinal axis of the refuse chute

In an example, the set of separating chutes may comprise a first side chute that extends at an angle, α, to the refuse chute (more specifically, the longitudinal y axis defined by the chute), so that refuse entering the first side chute follows an angled path when the inlet of the first side chute is positioned to align with the outlet of the refuse chute. Suitably, the angle may be less than 45°.

In a related example, the set of separating chutes may comprise a second side chute that extends at an angle, β, to the refuse chute (more specifically, the longitudinal y axis defined by the refuse chute), so that refuse entering the second side chute follows an angled path when the inlet of the first side chute is positioned to align with the outlet of the refuse chute. Suitably β may be oppositely directed than α, and may also be less than 45°.

In an example, each of the set of separating chutes may comprise a coupling means configured to couple each of the chutes with an adjacent chute. In particular, to couple the chutes together in a horizontal (x-z) plane (e.g., parallel to a supporting wall and orthogonal to the refuse chute).

In an example, the separating assembly may comprise a controller configured to operate the positioning mechanism to move the set of refuse separating chutes in response to an input. For example, the input may designate a category of refuse being delivered by the refuse chute, and each of the set of chutes may be associated with a particular category of refuse.

In another aspect of the present invention, there is provided a separator system for separating refuse, the system comprising a refuse chute, a set of receptacles, and the aforementioned separator assembly. The refuse chute, the separator assembly, and the set of refuse receptacles are preferably located in series in a vertical (y) direction, with the separator assembly suitably arranged in between the chute and receptacles. When an inlet of one of the separating chutes is positioned to receive refuse from the refuse chute, the corresponding outlet is positioned to deposit received refuse into a predetermined one of the set of refuse receptacles. That is, each separating chute in the set is configured to deposit refuse into a different one of the set of refuse receptacles when its inlet is arranged to receive refuse from the refuse chute.

### Brief Description of the Drawings

For a better understanding of the present disclosure reference will now be made by way of example only to the accompanying drawings, in which:
Fig. 1 shows a front view of an example separator system;
Fig. 2 shows a side view of the example system of Fig. 1;
Fig. 3 shows a top view of the separator system of Fig. 1;
Fig. 4 shows an example primary chute in a set of separator chutes;
Fig. 5 shows an example first side chute in a set of separator chutes;
Fig. 6 shows an example second side chute in a set of separator chutes;
Fig. 7 shows a schematic of an example separator assembly;
Fig. 8 shows an example separator assembly moved into a first configuration;
Fig. 9 shows an example separator assembly moved into a second configuration;
Fig. 10 shows an example separator assembly moved into a third configuration;
Fig. 11 shows a schematic of a second embodiment of an example separator assembly;
Fig. 12 shows a schematic of a third embodiment of an example separator assembly;
Fig. 13 shows a fourth embodiment of an example separator assembly in a first configuration;
Fig. 14 shows the fourth embodiment in a second configuration;
Fig. 15 shows the fourth embodiment in a third configuration.

### Detailed Description

At least some of the following example embodiments provide an improved separator assembly for separating refuse in a refuse chute. The example device is convenient to construct and use and, advantageously, compatible with existing refuse chutes. Many other advantages and improvements will be discussed in more detail herein.

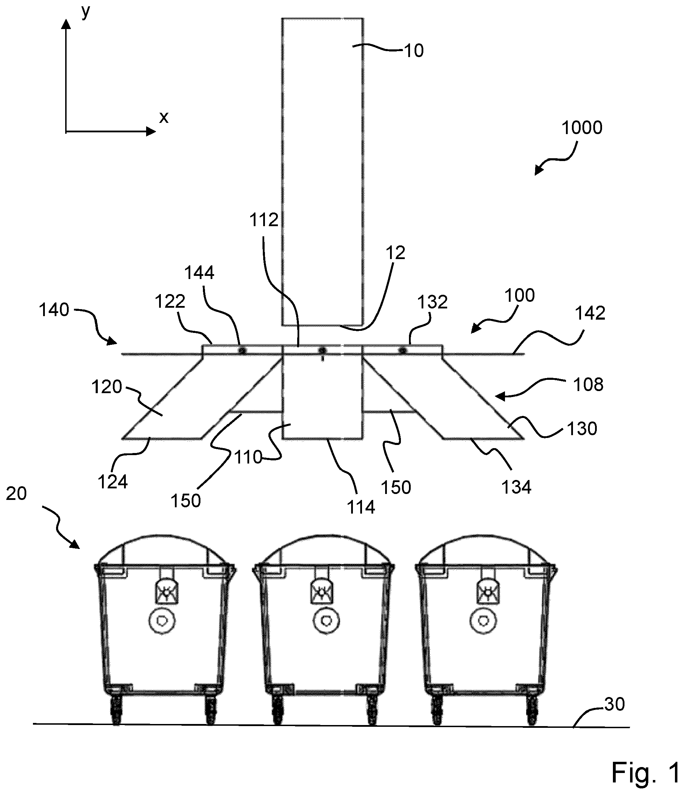

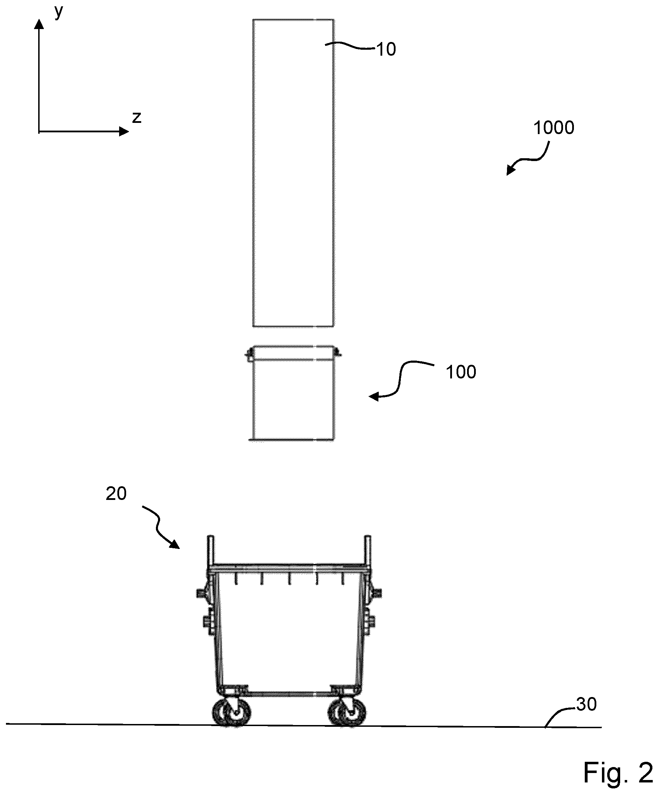

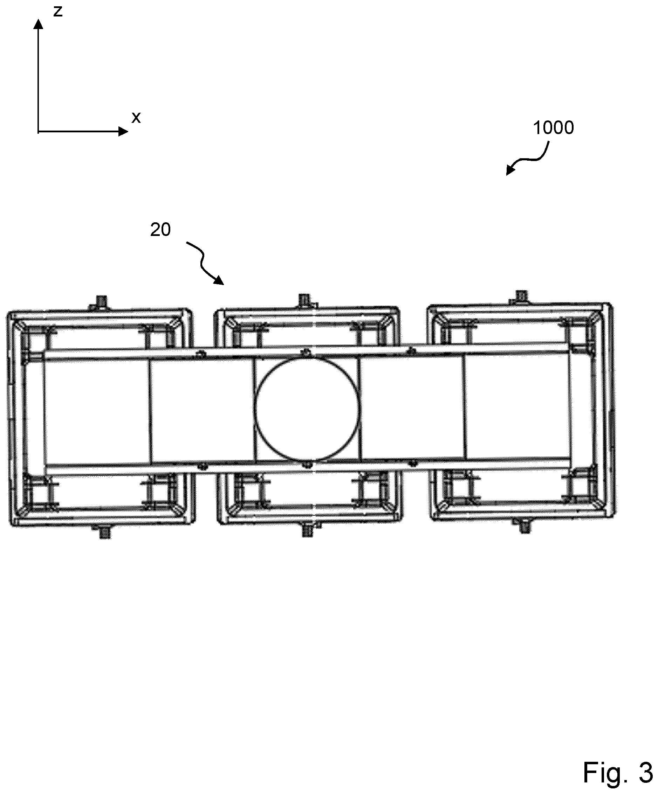

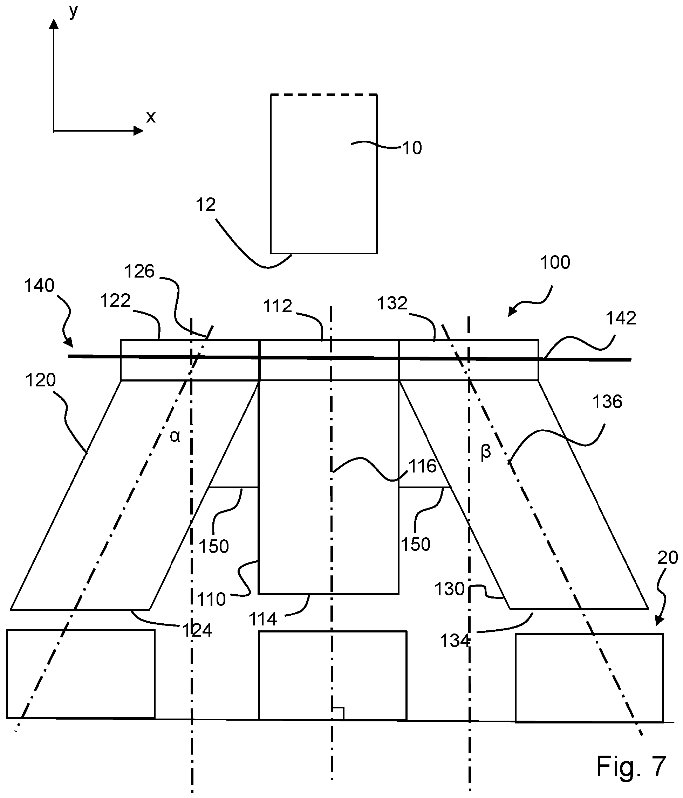

With reference to Figures 1 to 7, there is shown an example separator system 1000. The separator system 1000 comprises a separator assembly 100 in situ with a refuse chute 10 and a set of refuse, or waste, receptacles 20.

The chute 10 is aligned generally vertically (i.e., in a y direction), or at least with some vertical component, so that refuse put into the chute 10 may exits the chute 10 at its bottom end via an outlet 12 under force of gravity. The outlet 12 may be arranged to discharge waste substantially vertically, as shown, or at an angle. In the present examples, the described refuse chute 10 may be taken to be a substantially single construction which is intended to extend a substantially full height of a building (optionally including inclined sections to prevent complete free fall of waste), or final part thereof, such as a discharge pipe / chute extension section which is provided separately to the main refuse chute (in particular in scenarios where a main chute ends at a hole in a basement ceiling and the chute 10 is used as an extension therefrom).

The separator assembly 100 is located proximate to the bottom of the chute 10 in order to receive waste from the outlet 12. The separator assembly 100 is configured to direct waste received from the chute 10 to one of the set of refuse receptacles 20. Suitably, the separator assembly 100 is located between the refuse chute outlet 12 and the set of refuse receptacles 20. The set of refuse receptacles 20 are located on a support surface 30. In typical usage the support surface 30 may be taken as the ground. More generally, the support surface 30 may be taken to define a horizontal x-z plane with the receptacles 20 in the present example being aligned in an x-direction. Here z, y and z are taken to be orthogonal directions, and it can be seen that the refuse chute outlet 12, separator assembly 100, set of refuse receptacles 20 and the support surface 30 are configured substantially linearly in along the y-axis in the direction of gravity.

The separator assembly 100 comprises a set of separating chutes 108. In this example, the set of chutes 108 comprises three refuse separating chutes 110, 120, 130. The three refuse separating chutes 110, 120, 130 are connected to one another in series along the x-axis; i.e., each of the separating chutes is arranged laterally in the x-axis with respect to its neighbouring chute. Each of the refuse separating chutes 110, 120, 130 are attached to at least one other separating chute 110, 120, 130 by a coupling means 150. The coupling means 150 may be any means that couples the refuse separating chutes 110, 120, 130. For example, the coupling means 150 may be a piece of metal fixed to the walls of the refuse separating chutes 110, 120, 130 by screws, welding, or other fixing means.

Each of the separating chutes 110, 120, 130 comprise an inlet 112, 122, 132, an outlet 114, 124, 134, and walls that connect the inlets 112, 122, 132 to the outlets 114, 124, 134 (the walls forming closed channels). Here, each of the inlets 112, 124, 134 are arranged parallel to the outlets 114, 124, 134 and parallel to the support surface 30. However, it will be appreciated that the inlets 112, 122, 132 and outlets 114, 124, 134 may be arranged angled relative to each other. Suitably, refuse entering an inlet 112, 122, 132, passes through the respective channel and exits through the corresponding outlet 114, 124, 134.

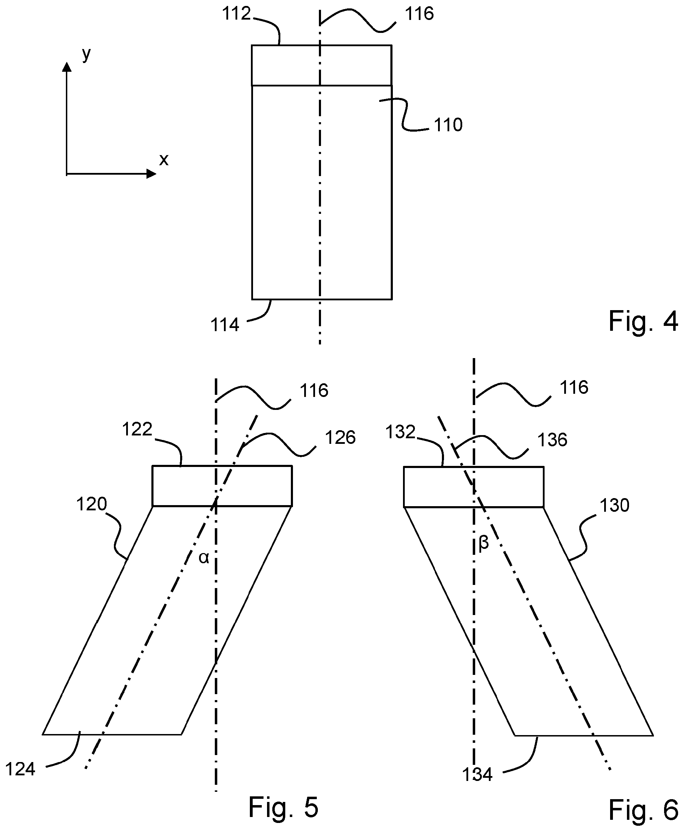

In more detail, the separating assembly 100 comprises a middle chute 110 (Fig. 4) and two side chutes: a first (left) side chute 120 (Fig. 5) and a second (right) side chute 130 (Fig. 6) which are positioned either side of the primary separating chute 110.

The middle chute of the set 108 which may be taken to be a primary separating chute 110, comprising walls that extend from inlet 112 to outlet 114. The inlet 112 of the primary chute 110 is arranged directly above its outlet 114 and parallel with the support surface 30. Suitably, the primary chute 110 may be taken to define a vertical (y) longitudinal axis 116 for the separator assembly 100, so that the inlet 112 and outlet 114 are arranged linearly separated along the longitudinal axis 116. In this way, waste received via inlet 112 travels downward under gravity, substantially without deviation, towards and out of the outlet 114.

The first side chute 120 is inclined at an angle of α relative to the longitudinal axis 116. More specifically, the outlet 124 of the first side chute is laterally displaced relative to the inlet 122 so that the walls connecting the inlet 122 to outlet 124 are inclined at an angle α. Suitably, waste entering the inlet 122 is deflected by the first side chute 120 by an angle α to travel along the axis 126. It will be appreciated that the angle α is less than 90° so that gravity may still act to direct waste from inlet 122 to outlet 124. Further preferably, the angle α is less than 45° to reduce the impact force of waste on the falling on the side chute 120. Generally, the angle α and lateral displacement of the inlet 122 and outlet 124 will depend on the lateral separation of the receptacles 20 on the support surface 30 and the distance the assembly 100 is arranged above the support surface. In other words, each assembly 100 is preferably bespoke to the environment in which it will be located.

The second side chute 130 is inclined at an angle of β relative to the longitudinal axis 116, again at an angle less than 90° and preferably less than 45°. That is, the outlet 134 is laterally displaced relative to the inlet 132 so that the walls of the second chute are inclined by angle β, and waste entering inlet 132 is deflected by the angle β to travel substantially along the axis 136. Again, the angle β will depend on the installation of the assembly 100 (i.e., based on height and receptacle separation), and although in the present example α and β are shown to be the same (in opposite directions), with the length of the chute also the same, it will be appreciated that β may be less than, the same as, or greater than α°, and the side chute lengths (i.e., distance inlet to outlet) may be different to each other and different to the primary chute 110 length.

The separator assembly 100 also comprises a positioning mechanism 140 configured to move the set of separating chutes 108 relative the refuse chute 10; specifically, to align one of the inlets 112, 122, 132 with the refuse outlet 12. The positioning mechanism 140 comprises a primary engagement means 142, and a corresponding secondary engagement means 144. Suitably, the primary engagement means 142 is configured to couple with the secondary engagement means 144 to facilitate the movement of the set of separating chutes 108 in relation to the refuse chute 10. The primary engagement means 142 may be means which move with the separator assembly 100, while the second engagement means 144 may be fixed in place, for example mounted to a nearby support structure, such as a wall or ceiling. In the present examples, the secondary engagement means 144 may comprise one or more rails (e.g., two rails in a track arrangement), while the primary engagement means 142 comprises wheels, cogs, roller bearings, or the like.

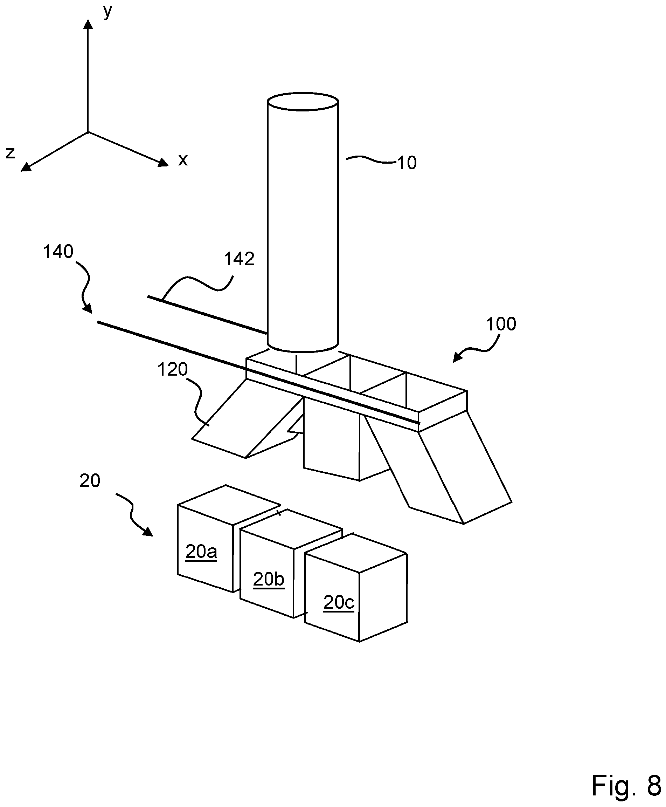

Figures 8 to 10 show the positioning mechanism 140 in operation to position the assembly 100 such that one of the set of separating chutes 108 is aligned to receive refuse from the chute outlet 12. At the same time, the respective chute in the set 108 is aligned to deposit waste into a respective one of the set of receptacles 20.

In a first configuration (Fig. 8) the inlet 122 of the first side chute 120 is aligned with the refuse chute outlet 12 while the outlet 124 of the first side chute 120 is aligned with a first one 20a of the set of refuse receptacles 20. It will be appreciated that alignment of the outlet 124 with the receptacle 20a is achieved by virtue of the lateral displacement of the outlet 124 with respect to the inlet 112 and the consequential deflection of received waste at the angle α away from its original vertical trajectory.

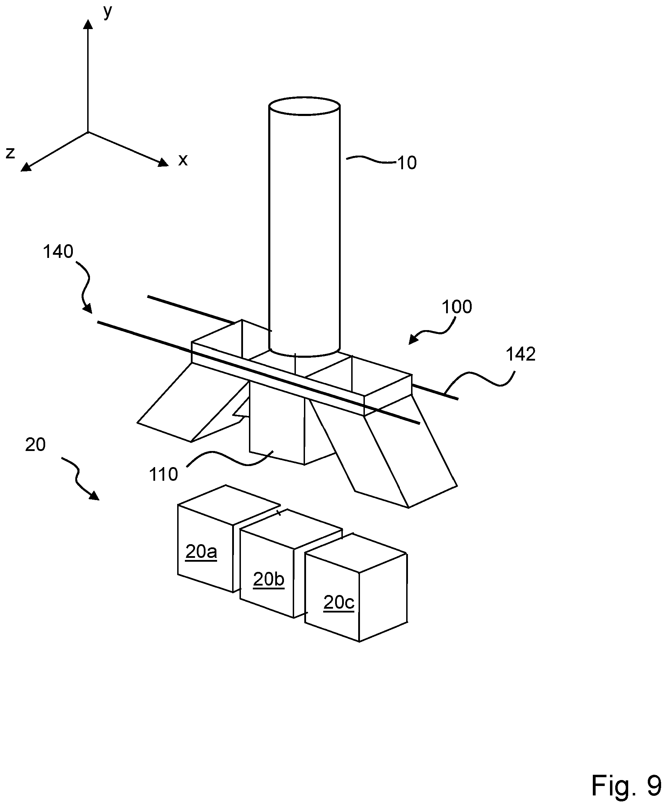

In a second configuration (Fig. 9) the inlet 112 of the primary chute 110 is aligned with the refuse chute outlet 12 while the outlet 122 of the primary refuse chute 110 is aligned with a second one 20b of the set of refuse receptacles 20. Here it will be appreciated that the outlet 12 of the chute 10 is already aligned with the second receptacle 20b, the primary chute 110 mainly ensuring that waste is not allowed to disperse at an angle which would allow it to miss the second receptacle 20b.

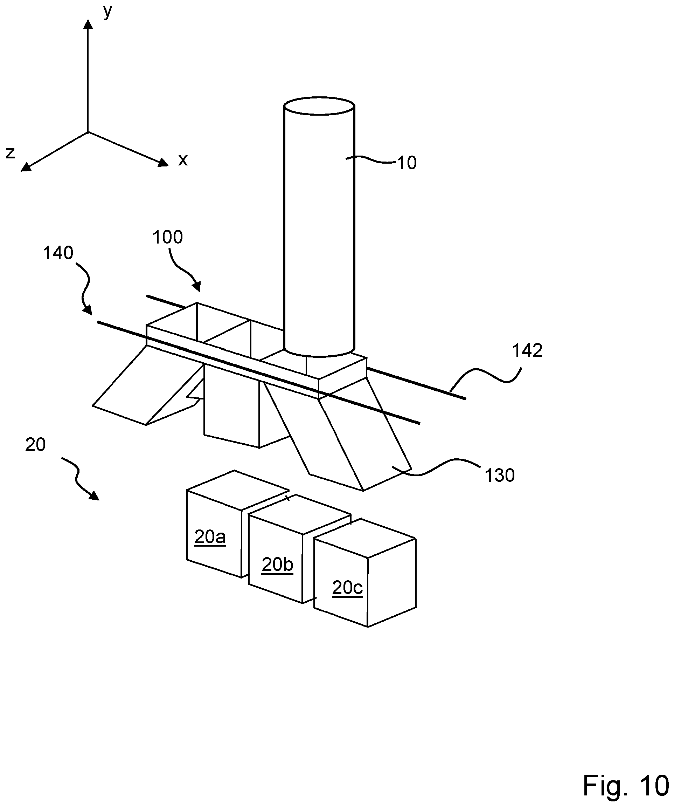

In a third configuration (Fig. 10) the inlet 132 of the second side chute 130 is aligned with the refuse chute outlet 12 and the outlet 134 of the second side chute 130 is aligned with a third one 20c of the set of refuse receptacles 20. Suitably, it will be appreciated that alignment of the outlet 134 with the receptacle 20c is achieved by virtue of the lateral displacement of the outlet 134 with respect to the inlet 114 and the consequential deflection of received waste at the angle β away from its original vertical trajectory.

The positioning mechanism 140 may be controlled by a suitable electronic controller (not shown) which activates a motor (also not shown) to move the set of separating chutes 108. The controller receives an input from a user that indicates the type of refuse being input to the refuse chute 10. The type of refuse correlates to one of the refuse receptacles 20. For example, the first refuse receptacle is to receive a first type of refuse and the second refuse receptacle is to receive a second type of refuse. Suitably, upon receipt of the input (i.e., once a user has selected a type of waste), the assembly 110 moves to position the relevant separating chute in the set 108 into position to receive waste from the outlet 12. The user then inserts their waste into the chute 10. Those in the art will be familiar with similar procedures in use for existing chute sorting mechanisms.

In this way waste of different types may be readily sorted into relevant categories, avoiding the need for later sorting (or indeed no sorting at all). The separating of refuse could be for recycling purposes; for example, each of the refuse receptacles 20 may be configured to receive a type of recycling material, such as, glass or plastic or cardboard. Separating the refuse in this manner makes it easier to recycle, however, the refuse may be separated into categories other than those which are beneficial to recycling. For example, to separate hazardous material from non-hazardous material, to direct refuse to another refuse receptacle once the former receptacle is filled to capacity, or any other separation of materials that may be desired. It will of course be appreciated that there may be as many positional configurations of the assembly 100 as there are separating chutes in the set 108 and corresponding receptacles 20.

In the above example the positioning mechanism 140 is shown moving the assembly 110 through a single, linear direction (e.g., along the x-axis), however it should be appreciated that in other examples, not shown positioning mechanism 140 may be configured to move the set of separating chutes 108 up/down an incline or through a curved path (e.g., curved within a horizontal plane rather than only a straight line).

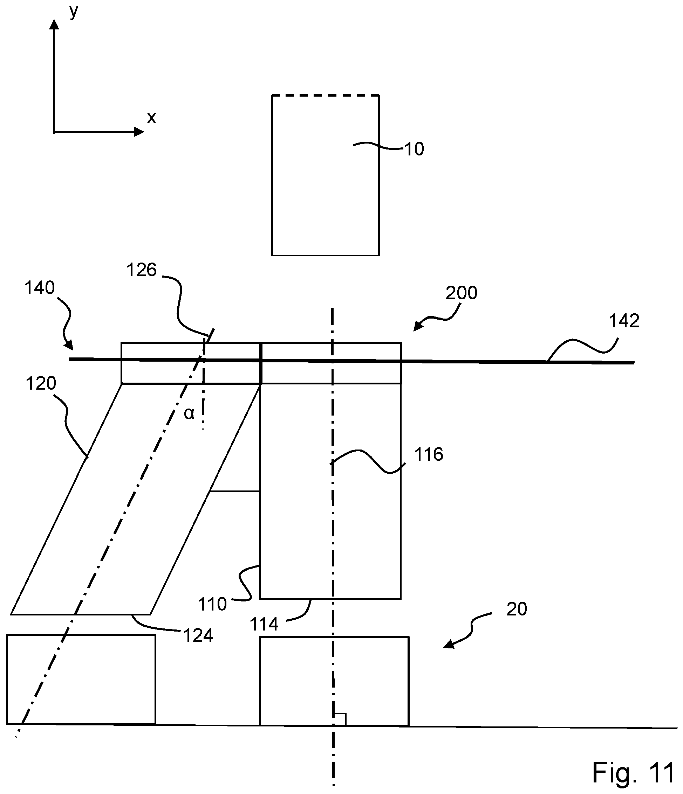

Figure 11 shows another example separator assembly 200 which functions similarly to the previously described assembly 100, but where the set 108 comprises only two separating chutes 110, 120 instead of three. Put another way, in this example the separator assembly 200 comprises a primary refuse separating chute 110 and an adjacently positioned first side refuse separating chute 120.

Like with the previous example assembly 100, the primary separating chute 110 is arranged vertically (i.e., parallel with the refuse chute 10), while the first side chute 120 extends at an angle α (to the longitudinal axis 116 of the assembly 110 and chute 10) away from the primary separating chute 110.

In operation, the positioning mechanism may be controlled to move the set of separating chutes 108 of the assembly 200 between a first configuration in which the primary separating chute 110 is aligned with the refuse outlet 12 and a second configuration in which the side chute 120 is aligned with the refuse outlet 12.

This second example assembly 200 may be appropriate where only two types of waste sorting are required and/or there is a limitation in space.

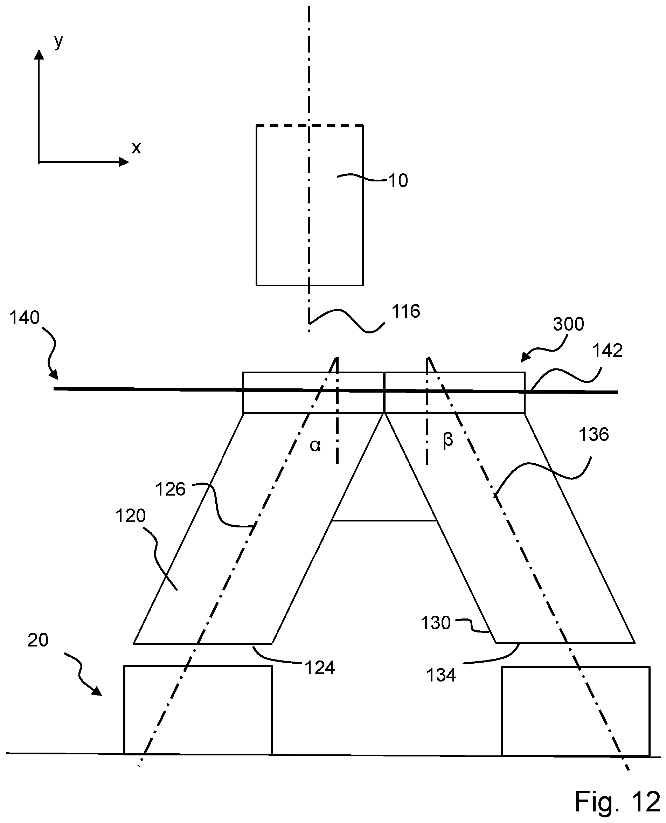

Figure 12 shows an example assembly 300 as an alternative to that shown in Fig. 11. Here, the assembly 300 likewise includes a set of chutes 108 comprising only two separating chutes 120, 130 but where there is no primary (that is to say, vertical) separating chute. Put another way, this third example assembly 300 comprises only side chutes which are each arranged at an angle to the longitudinal axis 116. As before, the angles α and β may be the same (with opposite signs/directions) or different, and likewise the length of each side chute 120, 130 may be different. Such an arrangement may be beneficial for allowing smaller angles α and β compared to the angle of the side chute in the example of Fig. 11, which may reduce impact stresses on the separating chutes when a dual separator assembly is desired.

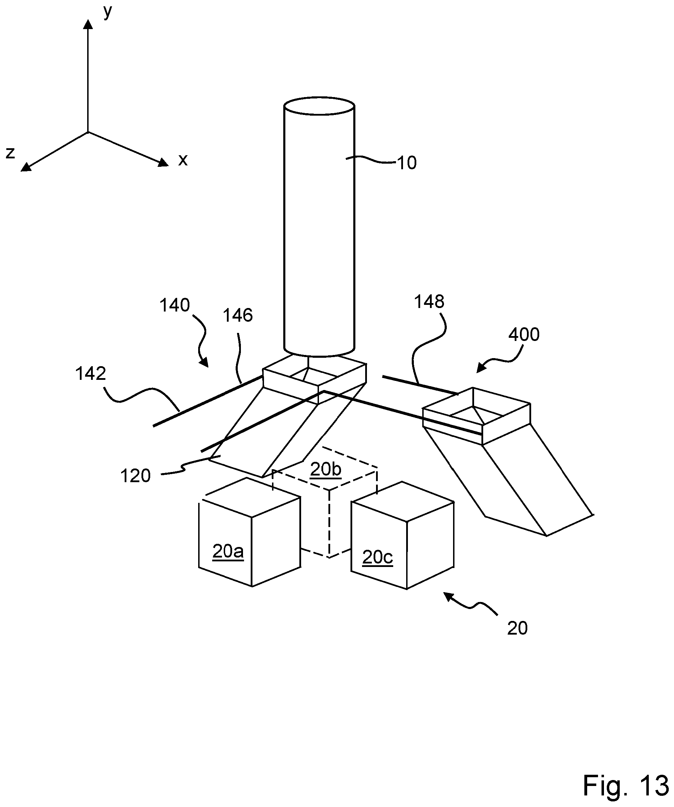

With reference to Figures 13 to 15, there is shown yet another example separator assembly 400, which again builds on the principles described above. Here the separator assembly 400 has been adapted to fit into a corner space. Such an arrangement may be appropriate in locations where the linear designs previously described (which are generally preferred) cannot be installed.

The example separator assembly 400 comprises a first separating chute 120 and a second separating chute 130, each arranged with an angled channel between inlet and outlet. The angles may be set analogously to the angles α and β above. Owing to the corner arrangement the two refuse separating chutes 120, 130 are not connected to one another. The separator assembly 400 comprises a positioning mechanism 140 in two parts, i.e., comprising a first positioning means 146 and a second positioning means 148. The first positioning means 146 are configured to move the first separating chute 120 relative to the refuse chute 10 and the set of refuse receptacles 20, and the second positioning means part 148 are configured to move the second separating chute 130 relative to the refuse chute 10 and the set of refuse receptacles 20. In a preferred arrangement, the first positioning means 146 and second positioning means 148 are configured to provide movement in orthogonal directions; for example, parallel to a proximate wall. It will of course be appreciated that in principle the first positioning means 146 and a second positioning means 148 may be configured to operate at various angles relative to each other.

In a first configuration (Fig. 13), the first side refuse separating chute 120 is moved using the first positioning means 146 to align with the chute 10. In this way received waste may be deposited in a first one 20a of the set of receptacles 20. More specifically, first chute 120 is moved using the first positioning means to align its inlet 122 with the refuse chute outlet 12 and, correspondingly, its outlet 124 is aligned with the first receptacle 20a.

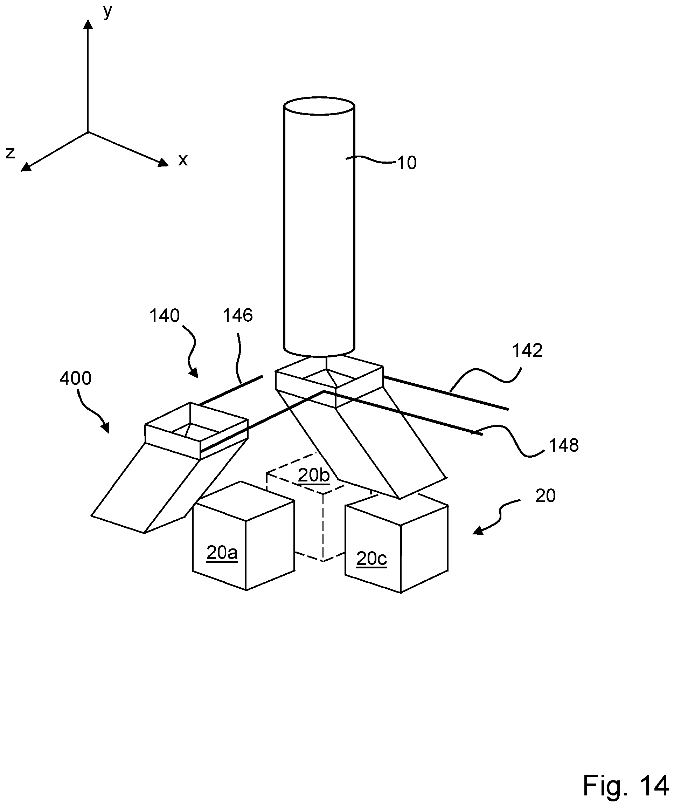

In a second configuration (Fig. 14), the second separating chute 130 is moved using the second positioning means 148 to align with the refuse chute 10 so as to deposit received waste in a second one 20c of the set of receptacles 20. More specifically, the second chute 130 is moved using the second positioning means to align its inlet 132 with the chute outlet 12 while its outlet 134 is correspondingly aligned with the second receptacle 20c.

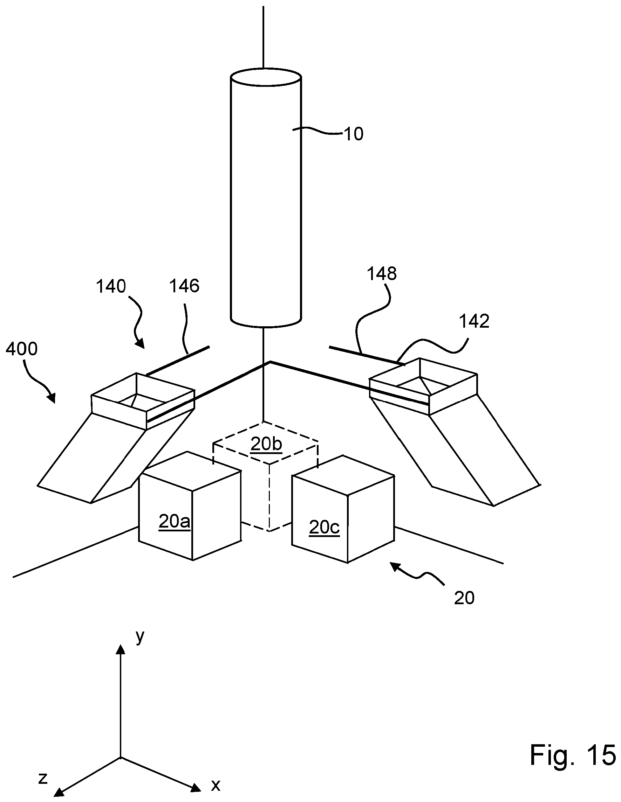

Optionally, the assembly 400 comprises a third configuration (Fig. 15) in which neither first nor second separating chutes 120, 130 are aligned with the chute 10 and set of receptacles 20. That is, the first and second chutes 120, 130 are moved using the respective positioning means to un-align their inlets from the chute outlet 12. In doing so waste input to the chute 10 will exit the outlet 12 and continue to travel downwards unaided. Suitably, a third one 20b of the set of receptacles 20 may be positioned directly underneath the chute outlet 12 so as to receive such waste. Put another way, in the third configuration the refuse does not enter any of the refuse separating chutes 120, 130 and is delivered directly to the set of refuse receptacles 20. In this way waste may to separated into three categories despite the challenges presented by a refuse chute being provided at a corner of a building.

In summary, exemplary embodiments of an improved refuse separator apparatus have been described. Additionally, the described exemplary embodiments are convenient to manufacture and straightforward to use. The example apparatus may be manufactured industrially from stainless steel, mild galvanised steel or other suitable materials using known manufacturing techniques. An industrial application of the example embodiments will be clear from the discussion herein.

Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Although preferred embodiment(s) of the present invention have been shown and described, it will be appreciated by those skilled in the art that changes may be made without departing from the scope of the invention as defined in the claims.

Each feature disclosed in this specification may be replaced by alternative features serving the same, equivalent or similar purpose, unless expressly stated otherwise. Thus, unless expressly stated otherwise, each feature disclosed is one example only of a generic series of equivalent or similar features.

All of the features disclosed in this specification, and/or all of the steps of any method or process so disclosed, may be combined in any combination, except combinations where at least some of such features and/or steps are mutually exclusive.

The invention is not restricted to the details of the foregoing embodiment(s) and is solely defined by the appended claims.

## Claims

1. A separator assembly (100) for a refuse chute (10), the separator assembly comprising;
a set of separating chutes (110, 120, 130), each separating chute comprising an inlet (112, 122, 132) for receiving refuse and an outlet (114, 124, 134) for outputting refuse; and
a positioning mechanism (140) configured to move the set of separating chutes relative to the refuse chute to align an inlet from one of the set of separating chutes with an outlet of the refuse chute;
wherein the outlets of each of the set of refuse separating chutes are arranged to direct refuse to a different location when the corresponding inlet is aligned with the outlet of the refuse chute.

2. The separator assembly as in claim 1, wherein the positioning mechanism comprises primary engagement means (142) coupled to the set of separating chutes (108) and secondary engagement means (144) coupled to a support structure (30); wherein the primary engagement means is configured to be engaged with the secondary engagement means such that the set of refuse separating chutes can be moved relative to the refuse chute (10) and the refuse receptacles (20).

3. The separator assembly as in claim 2, wherein the primary engagement means (142) comprises at least one of a roller bearing, a wheel, or a cog, and the secondary engagement means (144) comprises a rail configured to receive the at least one of roller bearing, wheel, or cog.

4. The separator assembly as in any of the preceding claims, wherein the positioning mechanism (140) is configured to move the set of refuse separating chutes (108) linearly.

5. The separator assembly as in any of the preceding claims, wherein the set of refuse separating chutes (108) comprises a primary chute (110) having inlet (112) and outlet (114) arranged colinearly along a longitudinal axis defined by the refuse chute (10), when the inlet of the primary chute is positioned to align with the outlet of the refuse chute.

6. The separator assembly of claim 5, wherein the set of separating chutes (108) comprises a first side chute (120) extending at an angle, α, relative to the longitudinal axis defined by the refuse chute (10), when the inlet of the first side chute is positioned to align with the outlet of the refuse chute.

7. The separator assembly as in claim 6, wherein the angle, α is less than 45°.

8. The separator assembly as in claims 6 or 7, wherein the set of separating chutes (108) comprises a second side chute (130) extending at an angle, β, relative to the longitudinal axis defined by the refuse chute (10), when the inlet of the first side chute is positioned to align with the outlet of the refuse chute.

9. The separator assembly as in claim 8, wherein the angle, β is less than 45°.

10. The separator assembly as in any of the preceding claims, wherein each separating chute (110, 120, 130) in the set comprises coupling means (150) configured to couple with an adjacent separating chute in the set.

11. The separator assembly as in any of the preceding claims, wherein the set of refuse separating chutes (108) are arranged adjacent to one another in a plane.

12. The separator assembly as in any of the preceding claims, wherein the refuse separating assembly further comprises a controller configured to control the positioning mechanism (140) to move the set of refuse separating chutes (108) in response to an input.

13. The separator assembly as in claim 12, wherein the input designates a category of refuse being deposited by the refuse chute (10).

14. A separator system for separating refuse comprising;
a refuse chute (10);
a set of refuse receptacles (20); and
the separator assembly (100) as in any of the preceding claims arranged in between the refuse chute and the refuse receptacles;
wherein when an inlet of one of the separating chutes (110, 120, 130) of the separator assembly is positioned to receive refuse from the refuse chute, the corresponding outlet of that separator chute is positioned to deposit the received refuse into one of the set of refuse receptacles, and wherein each separating chute in the set is configured to deposit refuse into a different one of the set of refuse receptacles when its inlet is arranged to receive refuse from the refuse chute.

## Patentansprüche

1. Abscheiderbaugruppe (100) für eine Abfallrutsche (10), wobei die Abscheiderbaugruppe Folgendes umfasst:
einen Satz Abscheiderutschen (110, 120, 130), wobei jede Abscheiderutsche einen Einlass (112, 122, 132) zur Aufnahme von Abfall und einen Auslass (114, 124, 134) zur Ausgabe von Abfall umfasst, und
einen Positionierungsmechanismus (140), der dazu ausgestaltet ist, den Satz Abscheiderutschen relativ zu der Abfallrutsche zu bewegen, um einen Einlass von einer des Satzes Abscheiderutschen auf einen Auslass der Abfallrutsche auszurichten,
wobei die Auslässe jeder des Satzes Abfallabscheiderutschen so angeordnet sind, dass sie Abfall an eine andere Stelle leiten, wenn der entsprechende Einlass auf den Auslass der Abfallrutsche ausgerichtet ist.

2. Abscheiderbaugruppe nach Anspruch 1, wobei der Positionierungsmechanismus ein primäres Eingriffsmittel, das an den Satz Abscheiderutschen (108) gekoppelt ist, und ein sekundäres Eingriffsmittel (144), das an eine Stützstruktur (30) gekoppelt ist, umfasst,
wobei das primäre Eingriffsmittel dazu ausgestaltet ist, mit dem sekundären Eingriffsmittel derart in Eingriff zu kommen, dass der Satz Abfallabscheiderutschen relativ zu der Abfallrutsche (10) und den Abfallbehältern (20) bewegt werden kann.

3. Abscheiderbaugruppe nach Anspruch 2, wobei das primäre Eingriffsmittel (142) ein Rollenlager und/oder ein Rad und/oder ein Zahnrad umfasst und das sekundäre Eingriffsmittel (144) eine Schiene umfasst, die zur Aufnahme des Rollenlagers und/oder des Rads und/oder des Zahnrads ausgestaltet ist.

4. Abscheiderbaugruppe nach einem der vorhergehenden Ansprüche, wobei der Positionierungsmechanismus (140) zur linearen Bewegung des Satzes Abfallabscheiderutschen (108) ausgestaltet ist.

5. Abscheiderbaugruppe nach einem der vorhergehenden Ansprüche, wobei der Satz Abfallabscheiderutschen (108) eine Primärrutsche (110) umfasst, deren Einlass (112) und Auslass (114) kolinear entlang einer durch die Abfallrutsche (10) definierten Längsachse angeordnet sind,
wenn der Einlass der Primärrutsche so positioniert ist, dass er auf den Auslass der Abfallrutsche ausgerichtet ist.

6. Abscheiderbaugruppe nach Anspruch 5, wobei der Satz Abscheiderutschen (108) eine erste Seitenrutsche (120) umfasst, die sich in einem Winkel α relativ zu der durch die Abfallrutsche (10) definierten Längsachse erstreckt, wenn der Einlass der ersten Seitenrutsche so positioniert ist, dass er auf den Auslass der Abfallrutsche ausgerichtet ist.

7. Abscheiderbaugruppe nach Anspruch 6, wobei der Winkel α kleiner als 45° ist.

8. Abscheiderbaugruppe nach Anspruch 6 oder 7, wobei der Satz Abscheiderutschen (108) eine zweite Seitenrutsche (130) umfasst, die sich in einem Winkel β relativ zu der durch die Abfallrutsche (10) definierten Längsachse erstreckt,
wenn der Einlass der ersten Seitenrutsche so positioniert ist, dass er auf den Auslass der Abfallrutsche ausgerichtet ist.

9. Abscheiderbaugruppe nach Anspruch 8, wobei der Winkel β kleiner als 45° ist.

10. Abscheiderbaugruppe nach einem der vorhergehenden Ansprüche, wobei jede Abscheiderutsche (110, 120, 130) in dem Satz Koppelmittel (150) umfasst, die dazu ausgestaltet sind, mit einer benachbarten Abscheiderutsche in dem Satz zu koppeln.

11. Abscheiderbaugruppe nach einem der vorhergehenden Ansprüche, wobei der Satz Abfallabscheiderutschen (108) einander benachbart in einer Ebene angeordnet sind.

12. Abscheiderbaugruppe nach einem der vorhergehenden Ansprüche, wobei die Abfallabscheidebaugruppe ferner eine Steuerung umfasst, die dazu ausgestaltet ist, den Positionierungsmechanismus (140) so zu steuern, um den Satz Abfallabscheiderutschen (108) als Reaktion auf eine Eingabe zu bewegen.

13. Abscheiderbaugruppe nach Anspruch 12, wobei die Eingabe eine Kategorie von Abfall bezeichnet, der von der Abfallrutsche (10) abgelegt wird.

14. Abscheidersystem zum Abscheiden von Abfall, umfassend:
eine Abfallrutsche (10),
einen Satz Abfallbehälter (20) und
die Abscheiderbaugruppe (100) nach einem der vorhergehenden Ansprüche, die zwischen Abfallrutsche und den Abfallbehältern angeordnet ist,
wobei, wenn ein Einlass einer der Abscheiderutschen (110, 120, 130) der Abscheiderbaugruppe zur Aufnahme von Abfall von der Abfallrutsche positioniert ist, der entsprechende Auslass dieser Abscheiderrutsche dazu positioniert ist, den aufgenommenen Abfall in einen des Satzes Abfallbehälter abzulegen, und wobei jede Abscheiderutsche in dem Satz dazu ausgestaltet ist, Abfall in einen anderen des Satzes Abfallbehälter abzulegen, wenn ihr Einlass zur Aufnahme von Abfall von der Abfallrutsche angeordnet ist.

## Revendications

1. Ensemble séparateur (100) pour un conduit vide-ordures (10), l'ensemble séparateur comprenant :
un groupe de conduits de séparation (110, 120, 130), chaque conduit de séparation comprenant une entrée (112, 122, 132) destinée à recevoir des ordures et une sortie (114, 124, 134) destinée faire sortir des ordures ; et
un mécanisme de positionnement (140) configuré pour déplacer le groupe de conduits de séparation relativement au conduit vide-ordures pour aligner une entrée d'un du groupe de conduits de séparation avec une sortie du conduit vide-ordures ;
dans lequel les sorties de chacun du groupe de conduits de séparation d'ordures sont agencées pour diriger des ordures jusqu'à un emplacement différent lorsque l'entrée correspondante est alignée avec la sortie du conduit vide-ordures.

2. Ensemble séparateur tel que dans la revendication 1, dans lequel le mécanisme de positionnement comprend des moyens de prise primaires couplés au groupe de conduits de séparation (108) et des moyens de prise secondaires (144) couplés à une structure de support (30) ;
dans lequel les moyens de prise primaires sont configurés pour être en prise avec les moyens de prise secondaires de manière telle que le groupe de conduits de séparation d'ordures peut être déplacé relativement au conduit vide-ordures (10) et aux réceptacles d'ordures (20).

3. Ensemble séparateur tel que dans la revendication 2, dans lequel les moyens de prise primaires (142) comprennent au moins un élément parmi un palier à rouleaux, une roue, ou une roue dentée, et les moyens de prise secondaires (144) comprennent un rail configuré pour recevoir l'au moins un élément parmi le palier à rouleaux, la roue, ou la roue dentée.

4. Ensemble séparateur tel que dans de quelconques des revendications précédentes, dans lequel le mécanisme de positionnement (140) est configuré pour déplacer le groupe de conduits de séparation d'ordures (108) linéairement.

5. Ensemble séparateur tel que dans de quelconques des revendications précédentes, dans lequel le groupe de conduits de séparation d'ordures (108) comprend un conduit primaire (110) ayant une entrée (112) et une sortie (114) agencées de façon colinéaire le long d'un axe longitudinal défini par le conduit vide-ordures (10), lorsque l'entrée du conduit primaire est positionnée pour s'aligner avec la sortie du conduit vide-ordures.

6. Ensemble séparateur de la revendication 5, dans lequel le groupe de conduits de séparation (108) comprend un premier conduit latéral (120) s'étendant à un angle α relativement à l'axe longitudinal défini par le conduit vide-ordures (10), lorsque l'entrée du premier conduit latéral est positionnée pour s'aligner avec la sortie du conduit vide-ordures.

7. Ensemble séparateur tel que dans la revendication 6, dans lequel l'angle α est inférieur à 45°.

8. Ensemble séparateur tel que dans les revendications 6 ou 7, dans lequel le groupe de conduits de séparation (108) comprend un second conduit latéral (130) s'étendant à un angle β relativement à l'axe longitudinal défini par le conduit vide-ordures (10), lorsque l'entrée du premier conduit latéral est positionnée pour s'aligner avec la sortie du conduit vide-ordures.

9. Ensemble séparateur tel que dans la revendication 8, dans lequel l'angle β est inférieur à 45°.

10. Ensemble séparateur tel que dans de quelconques des revendications précédentes, dans lequel chaque conduit de séparation (110, 120, 130) dans le groupe comprend des moyens de couplage (150) configurés pour se coupler avec un conduit de séparation adjacent dans le groupe.

11. Ensemble séparateur tel que dans de quelconques des revendications précédentes, dans lequel le groupe de conduits de séparation d'ordures (108) sont agencés de façon adjacente les uns aux autres dans un plan.

12. Ensemble séparateur tel que dans de quelconques des revendications précédentes, dans lequel l'ensemble séparateur d'ordures comprend en outre une unité de commande configurée pour commander le mécanisme de positionnement (140) pour déplacer le groupe de conduits de séparation d'ordures (108) en réponse à une entrée.

13. Ensemble séparateur tel que dans la revendication 12, dans lequel l'entrée désigne une catégorie d'ordures déposées par le conduit vide-ordures (10).

14. Système séparateur pour séparer des ordures, comprenant :
un conduit vide-ordures (10) ;
un groupe de réceptacles d'ordures (20) ; et
l'ensemble séparateur (100) tel que dans de quelconques des revendications précédentes agencé entre le conduit vide-ordures et les réceptacles d'ordures ;
dans lequel, lorsqu'une entrée d'un des conduits de séparation (110, 120, 130) de l'ensemble séparateur est positionnée pour recevoir des ordures en provenance du conduit vide-ordures, la sortie correspondante de ce conduit séparateur est positionnée pour déposer les ordures reçues dans un du groupe de réceptacles d'ordures, et dans lequel chaque conduit de séparation dans le groupe est configuré pour déposer des ordures dans un différent réceptacle du groupe de réceptacles d'ordures lorsque son entrée est agencée pour recevoir des ordures en provenance du conduit vide-ordures.
